# EUROPEAN PATENT SPECIFICATION

(11) **EP 1 760 628 B1**
(45) Date of publication and mention of the grant of the patent: **08.07.2009**
(21) Application number: 06017899.3
(22) Date of filing: 28.08.2006
(51) Int. Cl.: G06K 7/08, G06K 7/01, G11B 5/48, G11B 21/00, G11B 21/02

(54) **Magnetic head group, magnetic recording medium processing device and magnetic head-holding frame**
Magnetkopfgruppe, Vorrichtung zum Betrieb eines magnetischen Aufzeichnungsmediums und Halterahmen für einen Magnetkopf
Groupe de tête magnétique, dispositif de traitement de support d'enregistrement magnétique et cadre de support de tête magnétique

(30) Priority: 31.08.2005 JP 2005251685; 30.09.2005 JP 2005288905; 13.09.2005 JP 2005264859
(43) Date of publication of application: 07.03.2007
(73) Proprietor: Nidec Sankyo Corporation, Suwa-gun, Nagano 393-8511 (JP)
(72) Inventor: Yamanaka, Nobuyuki, c/o Nidec Sankyo Corporation, Suwa-gun Nagano (JP)
(74) Representative: Eisenführ, Speiser & Partner

(56) References cited:
- JP-A- 2004 241 033
- US-A- 5 945 654

## Description

The present invention relates to a magnetic head group which processes magnetic data of a magnetic recording medium, a magnetic recording medium processing device, and a magnetic head-holding frame.

Conventionally, as a magnetic recording medium processing device to process magnetic data of a magnetic recording medium, a magnetic reader/writer has been known in which a magnetic head is fixed to a holder, and the holder is arranged so as to move freely up and down with respect to the base set up between the first driving roller and second driving roller (for example, see JP 07-175896 A, Paragraph No. 14, and Figures 1 and 2). The magnetic head of this magnetic card reader/writer is attached to the base of the magnetic card reader/writer through a pressing spring.

Moreover, in the conventional magnetic disk device, in order to identify a head IC easily and accurately, three chip resistances R1 - R3 and connector pins are mounted to the printed wiring substrate, and a head IC is mounted to the tip of a flexible cable, and the flexible cables are joined (for example, see JP 2004-241033 A). In this magnetic disk device, the probe of an inspection device is connected to a connector pin installed on the printed wiring substrate to measure impedances of chip resistances R1 and R3 thereby making identification of the head IC possible.
US 5,945,654 underlying the preamble of claim 1 A discloses a card reader with a dual-headed card slot, comprising a main unit, two magnetic heads, a circuit board and a power cord. Near the center part of the main unit are two side walls forming a card slot, on each of the two side walls is an opening and a magnetic head fixing unit. The two magnetic heads are respectively fixed on two spring plates. The spring plates are then fixed to the magnetic head fixing unit on the main unit, so that the front end of the magnetic head is extending through the opening of the main unit to the inside of the card slot. The circuit board is fixed on the outside of one side wall of the main unit, and on a position of which corresponding to the magnetic head is an opening, the opening serves as space to the extending and retracting movement of the magnetic head during the card reading process, so that the magnetic head will not be jammed. On the circuit board is a power cord socket, into the power cord socket is inserted a power cord. By such a structure, since one magnetic head is equipped at each side of the card reading slot, the user will feel free to insert either side of a magnetic card through the card slot for the reading process, so that it will he much more convenient to the user who will he able to save the trouble of having to identify which is the effective reading side.

When a magnetic recording medium processing device that processes magnetic data recorded in a credit card and the like is used over an extended period of time, the magnetic head that reads/writes magnetic data wears off. Since, as wear of the magnetic head proceeds to exceed the usage limit, reading/writing of magnetic data cannot be done normally, the magnetic head must be replaced periodically. Especially, for the magnetic recording medium processing devices installed outdoors or in dusty locations, wear of magnetic heads tends to proceed readily.

When a magnetic head is exchanged, the worn magnetic head must be removed to install a new magnetic head; at the same time, an azimuth adjustment must be done to match the angle of inclination of a magnetic head gap with magnetic information recorded on the magnetic stripe of the magnetic recording medium, which is used as the master.

Moreover, for magnetic heads, there are many types of magnetic heads depending on applications such as those suitable for high coercivity magnetic substances, those suitable for low coercivity magnetic substances, magnetic heads specific for reading, magnetic heads for a combination of reading and writing, hard heads of long life and the like; in the host device, according to the type of this magnetic head, various magnetic information is processed and controlled.

Next, after an extended period of time of the use of a magnetic recording medium processing device that processes magnetic data recorded in a magnetic recording medium, stains are deposited on a magnetic head that reads/writes magnetic data, and the contact surface of the magnetic head in contact with the magnetic recording medium wears off. When stains are deposited on the magnetic head, and wear of the contact surface of the magnetic head proceeds to exceed the limit of usage, reading/writing of magnetic data cannot be done normally. As a result, at the time of maintenance of a magnetic card processing device, the situation of wear of the magnetic head must be observed and, as needed, cleaning of the contact surface of the magnetic head or exchanging the magnetic head is carried out.

When the state of the magnetic head contact surface is observed, conventionally, there has been a problem; that is, a magnetic head or the assembly part in which the magnetic head is integrated must be removed for confirmation.

In order to solve this problem, proposed is a magnetic card reader/writer which is constructed in such a way that the opposed roller set up opposite to the magnetic head is mounted so as to be slid freely with respect to the rotary shaft of the opposed roller, and the magnetic head is pressed and energized to the opposed roller side by the force of a head pressing spring (for example, see JP 07-175896 A). When maintenance work such as removal of magnetic head stains or the like is done, in this magnetic card reader/writer, the contact surface of the magnetic head which contact-slides on the magnetic card is supposed to be cleaned simply by allowing the opposed roller to slide along the rotary shaft, and opening the top of the magnetic head.

Moreover, various types of cards (recording media) such as credit cards, prepaid cards, cash cards and the like have hitherto been used. Among these cards, there is a magnetic card in which magnetic substance-coated magnetic stripes are provided on the card surface, and various types of information are recorded in the magnetic stripes. According to the types and applications, there are various types of magnetic cards (recording media) with different positions, widths, lengths and recording formats of magnetic stripes. There is a card processing device (recording medium processing device) for each type and application of these magnetic cards.

When an improper card with a different type and application is inserted in a card processing device of a specific application, the card gets stuck, or an error occurs without a processing operation. Known for a card processing device to prevent such a nonconformity from occurring is a card processing device equipped with a card width sensor which inspects the suitability of the size of the magnetic card inserted, a prehead which reads magnetic information of the magnetic card inserted to judge whether the card is processable, and a shutter which opens or closes the transfer route according to the propriety of the magnetic information read by the prehead (for example, see JP 2001-67514 A).

In such a card processing device, as the taking-in operation of a magnetic card into the card processing device, usually users insert a magnetic card from the inserting hole, and the card width sensor detects if it is a magnetic card of the right processing object; when the prehead reads out that it is the magnetic card of the right processing object, the shutter is opened to rotate multiple transfer rollers including the front transfer roller to transfer the magnetic card into the card processing device, and the shutter is closed again for crime prevention. Then, when card processing such as a payment of cash, deposition or the like with a magnetic card is completed, in order to return the magnetic card taken in to the user, the shutter is opened to rotate the transfer roller in the reverse direction, and the transfer roller is stopped temporarily in the state that the rear end on this side of the magnetic card is allowed to stick out from the inserting hole of the magnetic card. Then, the user is instructed to pull out the magnetic card.

At this juncture, the tip of the back of the magnetic card which has jumped out and stopped is held by the front transfer roller which is arranged inside the main body configuration part of a card processing device. Even after a given time elapses, when the user does not pull out the magnetic card, it is judged that the user forgets to pull out the magnetic card. Then the front transfer roller rotates backward to transfer the magnetic card again to the inside of the card processing device, closes the shutter and stores it in an exclusive stacker

Nevertheless, in the case of the magnetic reader/writer described in JP 07-175896 A, when a magnetic card is installed in a card reader, an azimuth adjustment of the magnetic card must be carried out, which is time-consuming. Moreover, it is surmised that automatic recognition of the type of a magnetic head installed by a host device is also difficult.

Moreover, in the magnetic disk device described in JP 2004-241033 A, measuring impedances of chip resistances R1 - R3 is supposed to make identification of the head IC possible. However, a nonconformity such as a need for a printed wiring substrate for mounting chip resistances R1 - R3 and connector pins occurs.

Moreover, in the magnetic card reader/writer described in JP 07-175896 A, even when the opposed roller is allowed to slide along the rotary shaft, since the roller shaft is still present right on the top of the magnetic head to be cleaned, observation of wear or staining of the contact surface of a magnetic head is difficult, and cleaning of the magnetic head is not an easy task.

On the other hand, in the case of a magnetic card processing device compatible with a magnetic recording medium in which magnetic stripes are installed on both surfaces, it was extremely difficult to confirm the wear situation of the magnetic head corresponding to each magnetic stripe and to carry out the cleaning operation.

Furthermore, in the card processing device described in JP 2001-67514 A, since a card width sensor, prehead, shutter mechanism and the like are present between the card inserting hole and the front transfer roller which the magnetic card contacts first, the discharged length of the magnetic card at the time of discharging the magnetic card could not be secured sufficiently, and depending on the user, it occurred that the magnetic card could not be easily grasped.

To be precise, in the case of a card processing device which processes about 85 mm long general magnetic cards, the conventional discharged length of the magnetic card was in the magnitude of 23 - 33 mm. While a healthy person would not have any problem of pulling out a magnetic card with this extent of discharged length, for senior citizens or users with manual impairments, it is not a sufficient length, and they might not grasp the magnetic card properly.

An objective of the present invention is to provide a magnetic head group and a magnetic recording medium processing device wherein the magnetic head installation can be done easily and, at the same time, maintenance cost can be reduced. Moreover, another objective of the present invention is to provide a magnetic head group and a magnetic recording medium processing device wherein a host device can automatically identify the type configuration of a magnetic head installed in a magnetic recording medium processing device.

The magnetic head group invented that solves the above-mentioned problem is characterized by the fact that it is a magnetic head group mounted to a magnetic recording medium processing device that reads/writes magnetic data on a magnetic recording medium; and it is equipped with said magnetic head that reads/writes magnetic data; a head bracket which fixes said magnetic head and holds it in such a way that it moves freely in the direction perpendicular to the magnetic stripe of said magnetic recording medium; and a flexible print circuit board which is provided with a magnetic head-holding frame which holds said head bracket and has a frame side-fitting part that installs said magnetic head group in a given position inside said magnetic recording medium processing device so as to form a given angle of inclination, and a head identification part to identify said magnetic head type, and is connected electrically to said magnetic head.

According to this invention, since the magnetic head is equipped with a head bracket which fixes said magnetic head and holds it in such a way that it moves freely in the direction perpendicular to the magnetic stripe of the magnetic recording medium, and a magnetic head-holding frame which holds the head bracket and has a frame side-fitting part that installs the magnetic head group in a given position inside the magnetic recording medium processing device so as to form a given angle of inclination; therefore, easy-and-good-positioning exchanging of the magnetic head which worn off or the like and requiring changing can be changed on a magnetic head group basis easily with good position accuracy. As a result, compatibility of the magnetic head group constructed with the magnetic head-holding frame on which the magnetic head is built can be-secured and, at the same time, an adjustment operation such as an azimuth adjustment can be eliminated. Further, according to this invention, since the magnetic head group has a flexible print circuit board with a head identification part, the magnetic head installed in the exchanged magnetic head group can be identified easily; this eliminates misidentification of the type of the head being exchanged due to wear or the like. Therefore, the magnetic head exchange due to wear or the like can be done easily and, at the same time, maintenance cost of the magnetic recording medium processing device can be reduced.

In the magnetic head group of the present invention, the head identification part is characterized by the fact that it is an identification circuit comprising jumper elements, which is set up on the side opposite to one end where the magnetic head of the flexible print circuit board is installed and, according to the connection combination of the jumper elements, identification of the magnetic head type with a host device is made possible.

According to this invention, because the identification circuit including jumper elements is set up on the side opposite to one end where the magnetic head is installed, the circuit configuration can be simple and short. As a result, misidentification of the magnetic head due to breakage or shorting of lines can be prevented.

In the magnetic head group of this invention, the magnetic head group is characterized by the fact that, the frame side-fitting part that the magnetic head-holding frame has a positioning part which positions the magnetic head-holding frame on the transfer route on which the magnetic recording medium is transferred, and a fixing part which makes the magnet head-holding frame detachable.

According to this invention, because the frame side-fitting part has a positioning part which positions the magnetic head-holding frame on the transfer route on which the magnetic recording medium is transferred, and a fixing part which makes the magnet head-holding frame detachable, the magnetic head-holding frame can be positioned accurately with respect to the transfer route. As a result, the magnetic head fixed onto the magnetic head-holding frame can be positioned on the transfer route on which the magnetic recording medium is transferred, and reading/writing of the magnetic data on the magnetic recording medium can be carried out accurately. Further, the frame side-fitting part of this type on the magnetic head-holding frame has makes exchanging of the magnetic head group in the magnetic recording medium processing device easy. Hence, the magnetic head exchange due to wear or the like can be done easily and, at the same time, maintenance cost of the magnetic recording medium processing device can be reduced.

The magnetic recording medium processing device that solves the above-mentioned problems is characterized by the fact that it is a magnetic recording medium processing device equipped with at least a frame to form a transfer route on which a magnetic recording medium is transferred, and the magnetic head group as described in any of Claims 1-3; and the frame side-fitting part of the magnetic head group is fixed in a given position inside the magnetic recording medium processing device at a given angle of inclination by installing the magnetic head-holding frame in the frame.

According to this invention, since the frame side-fitting part of the magnetic head-holding frame is installed in the frame providing the transfer path on which the magnetic medium is transferred, the magnetic head-holding frame can be positioned on the transfer path accurately. As a result, the magnetic head fixed on the magnetic head-holding frame of the magnetic head group can be positioned on the transfer path on which the magnetic recording medium is transferred, and reading/writing of the magnetic data on the magnetic recording medium can be carried out accurately. In addition, the magnetic recording medium processing device of this invention makes the magnetic head group exchange easy. So the required magnetic head group exchange due to wear or the like can be carried out easily with good position accuracy. Moreover, since the magnetic recording medium processing device of this invention has a flexible print circuit board which is equipped with a magnetic head group with a head identification part, the magnetic head installed on the exchanged magnetic head group can be identified easily and, at the same time, misidentification of the type of the magnetic head exchanged due to wear or the like will not occur.

In the magnetic recording medium processing device, the frame is characterized by the fact that it has a device side-fitting part on the frame side-fitting part of the magnetic head-holding frame of the magnetic head group.

According to this invention, since the frame has a device side-fitting part on the frame side-fitting part of the magnetic head-holding frame of the magnetic head group on, the magnetic head-holding frame can be positioned on the transfer path accurately utilizing the device side-fitting part.

The magnetic head-holding frame that solves the above-mentioned problems is characterized by the fact that it is a magnetic head-holding frame that holds a magnetic head mounted to a magnetic recording medium processing device which reads/writes magnetic data on a card type magnetic recording medium; and has multiple guide pins for holding a magnetic head-fixing head bracket so as to move it freely in the direction perpendicular to the magnetic stripe surface of said magnetic recording medium, and a frame side-fitting part which installs the held magnetic head in a given position inside said magnetic recording medium processing device so as to form a given angle of inclination; and is formed with engineering plastics.

According to the present invention, the magnetic head-holding frame has multiple guide pins for holding a magnetic head-fixing head bracket so as to move it freely in the direction perpendicular to the magnetic stripe surface, and a frame side-fitting part which installs the held magnetic head in a given position inside the magnetic recording medium processing device so as to form a given angle of inclination; this provides a magnetic head-holding frame of a magnetic head group that can be fixed at a given position inside the magnetic recording medium processing device so as to form a given angle of inclination. In addition, the frame of this type can be made small, light and cost effectively. Moreover, since the magnetic head-holding frame of this type can be formed with engineering plastics with rigidity, the magnetic head-holding frame can be made small, light, and cost effectively. Furthermore, as to engineering plastics, they can be represented by PPS (polyphenylene sulfide), m-PPE (denatured polyphenylene ether), and PC (polycarbonate), and the like.
Fig. 1 is a plan view showing an example of magnetic recording medium processing device of the present invention.
Fig. 2 is the I-I cross section of Fig. 1.
Fig. 3 is a plan view showing an example of the magnetic head group of the present invention.
Fig. 4 is a front view of the magnetic head group of Fig. 3.
Fig. 5 is a bottom view of the magnetic head group of Fig. 3.
Fig. 6 is a plan view showing an example of the magnetic recording medium processing device concerning Embodiment 1 of the present invention.
Fig. 7 is the II-II cross section of the magnetic recording medium processing device of Fig. 6.
The embodiment provides a magnetic head group, a magnetic recording medium processing device, and a magnetic head-holding frame in which maintenance cost can be reduced and, at the same time, the magnetic head installation can be done easily.

The magnetic head group, magnetic recording medium processing device, and magnetic head-holding frame of the present invention are described hereafter, referring to a drawing. Note that within the scope of technical characteristics, the present invention is not limited to the following descriptions and drawings.

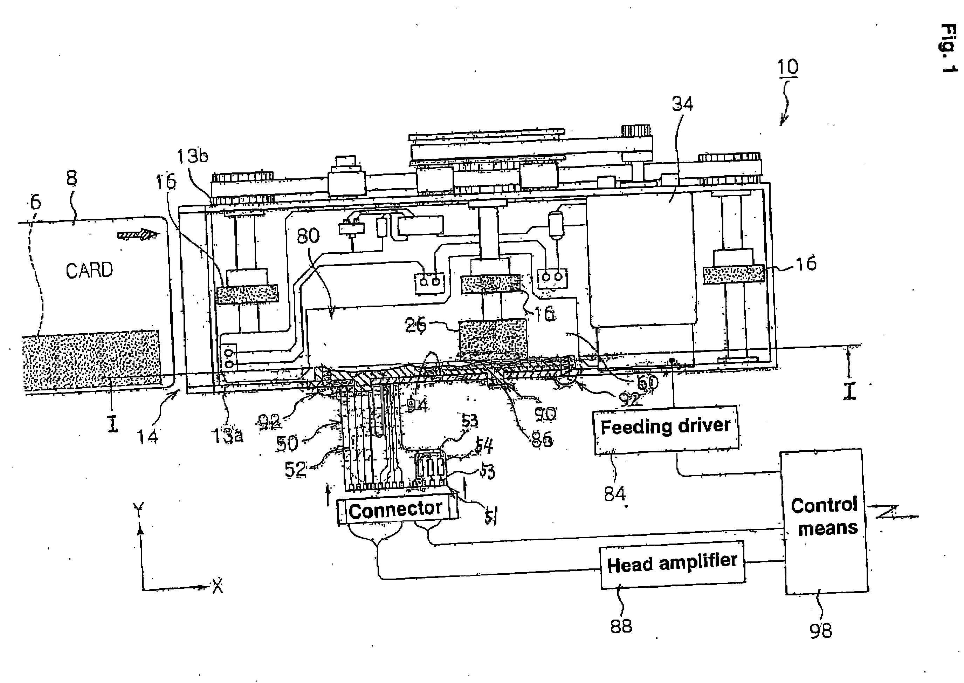

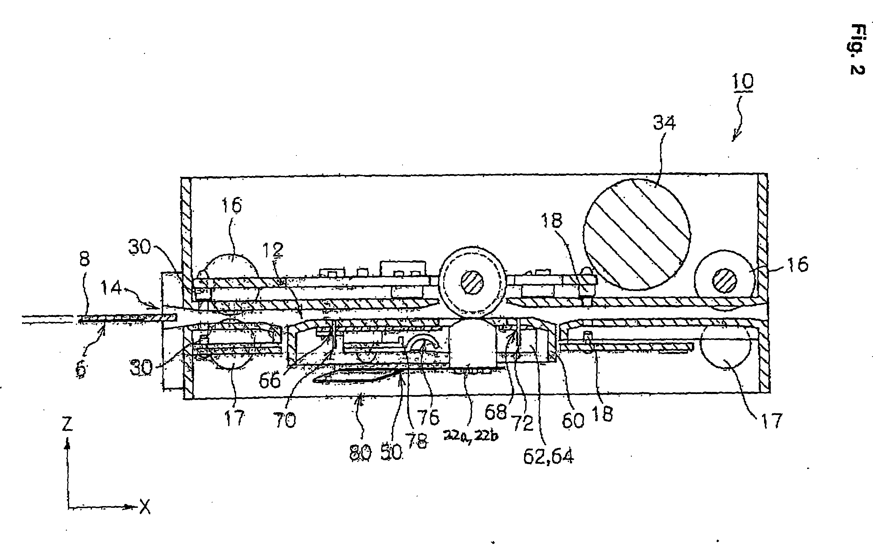

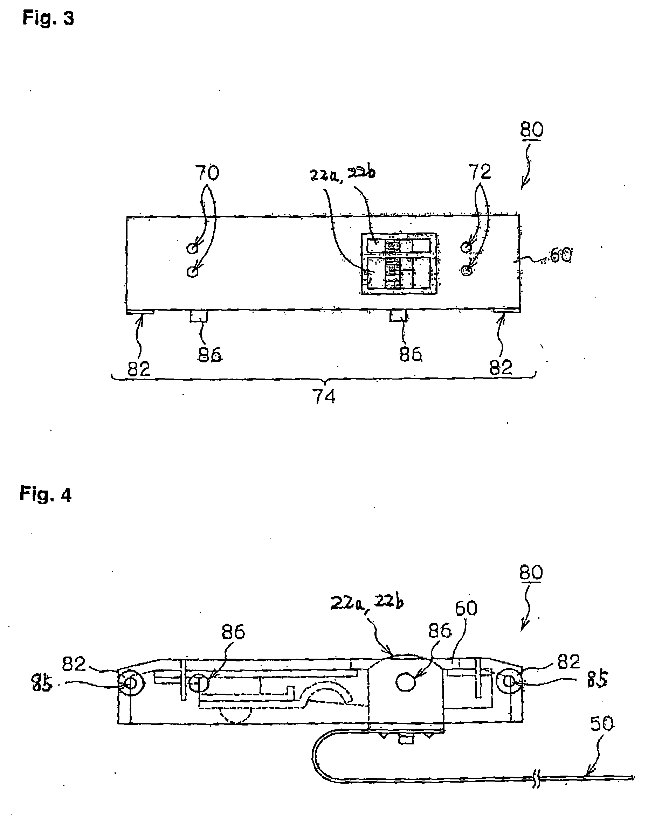

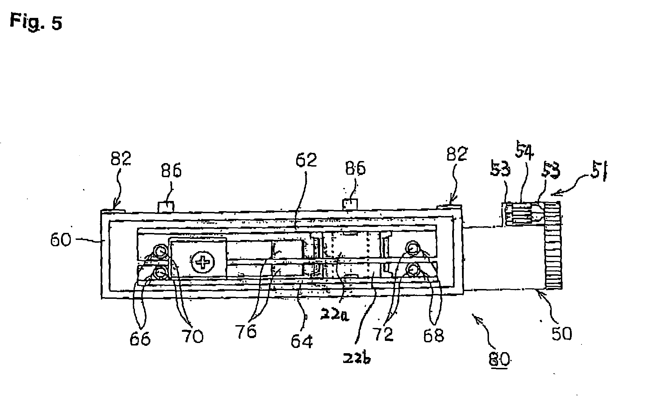

Fig. 1 is a plan view showing an example of the magnetic recording medium processing device of the present invention. Fig. 2 is the I-I cross section of Fig. 1. Fig. 3 is a plan view showing an example of the magnetic head group of the present invention. Fig. 4 is a frontal view of the magnetic head group shown in Fig. 3, and Fig. 5 is a bottom view of a magnetic head group showing in Fig. 3.

Magnetic recording medium processing device 10 comprises, as shown in Figs. 1 and 2, at least frame 13 (13a and 13b), which forms transfer route 12 to transfer magnetic recording medium 8 of the card type such as a credit card, prepaid card, cash card, and the like, and magnetic head group 80 which undertakes reading/writing of magnetic data on the magnetic recording medium. And magnetic head group 80 is fixed to a given position in the magnetic recording medium processing device at a given angle of inclination by attaching frame side-fitting part 74 of magnetic head-holding frame 60 to fitting part-side frame 13a, which is a frame. Note that, in the present invention, "a given angle of inclination" is the angle of inclination of the magnetic head gap with respect to the transfer direction (the longitudinal movement of a magnetic stripe) of the magnetic recording medium; the magnetic head gap is adjusted to become perpendicular to the transfer direction of the magnetic recording medium in this embodiment mode.

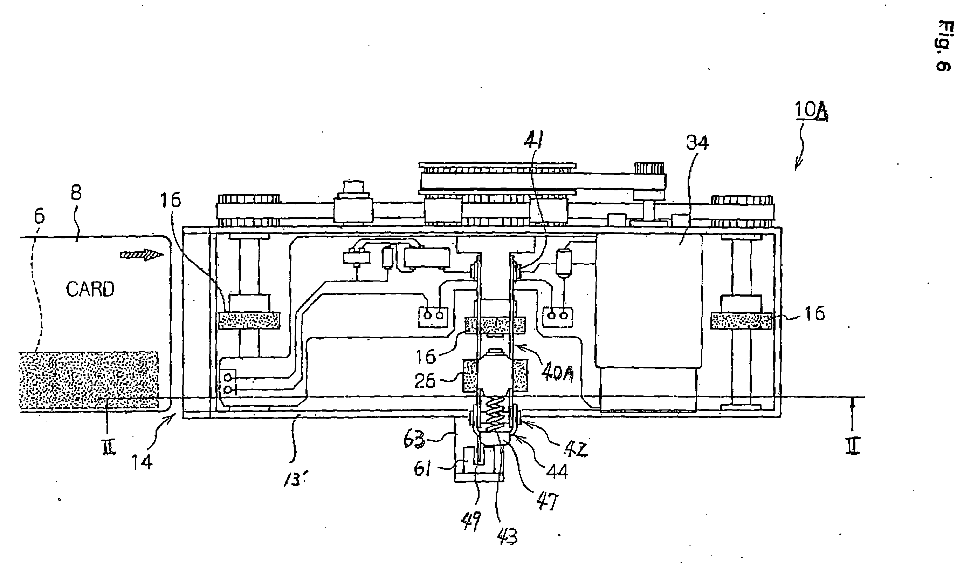

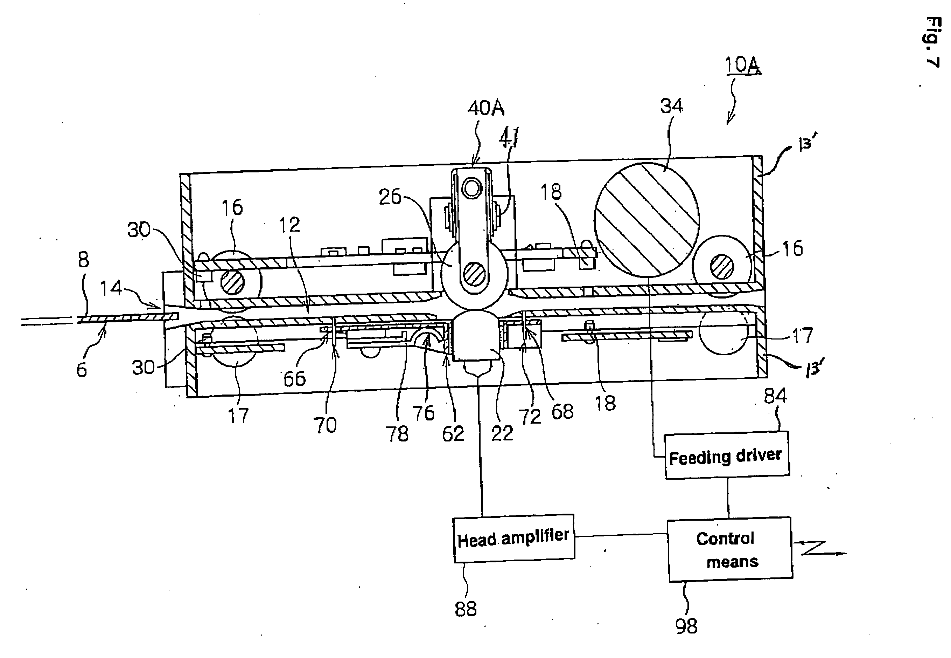

As shown in Figs 3 to 7, magnetic head group 80 attached to magnetic recording medium processing device 10 is equipped with first magnetic heads 22a and 22b as magnetic heads that reads/writes magnetic data; head brackets 62 and 64 which fix first magnetic heads 22a and 22b and hold so as to move the first magnetic heads freely in the direction perpendicular to magnetic stripe surface 6 of magnetic recording medium 8; magnetic head-holding frame 60 with frame side-fitting part 74 that holds head brackets 62 and 64 and, at the same time, installs magnetic head group 80 in a given position inside magnetic recording medium processing device 10 so as to form a given angle of inclination; and flexible print circuit board 50 which has head identification part 51 for identifying the type of first magnetic heads 22a and 22b, and is electrically connected to first magnetic heads 22a and 22b.

Magnetic recording medium processing device 10 is a unit that has the following basic functions: If a user inserts magnetic recording medium 8 of the card type such as a credit card, prepaid card, cash card, and the like into recording-medium intake 14, magnetic recording medium 8 is transferred along transfer route 12 of magnetic recording medium processing device 10, and various kinds of data recorded on magnetic stripe 6 of magnetic recording medium 8 are read, and monetary payment, transfer, or a similar processing is undertaken. Magnetic recording medium processing device 10 of the present invention is applied to the unit that has these fundamental performances, which should not be limited to the contents described below.

Magnetic recording medium processing device 10 is equipped with, for example, recording-medium intake 14 through which magnetic recording medium 8 is inserted; transfer roller 16 and driven roller 17 which lead the inserted magnetic recording medium 8 along transfer route 12; multiple photo sensors 18 which check the size and position of the inserted magnetic recording medium 8; first magnetic heads 22a and 22b that read/write various kinds of data recorded on magnetic stripe 6; and opposed roller 26 which pushes magnetic recording medium 8 against first magnetic heads 22a and 22b- Note that, in the present invention, "reading/writing" means reading and/or writing.

In the vicinity of recording-medium intake 14 in magnetic recording medium processing device 10, insertion sensor 30 which usually detects the insertion of magnetic recording medium 8 is provided. This insertion sensor 30 detects the insertion of magnetic recording medium 8 in recording-medium intake 14 and transmits the signal detected by insertion sensor 30 to control means 98 of magnetic recording medium processing device 10.

As insertion sensor 30 detects the insertion of magnetic recording medium 8, control means 98 outputs a signal to feeding driver 84 to rotate transfer roller 16. This output allows control means 98 to lead magnetic recording medium 8 to the deeper end of magnetic recording medium processing device 10.

Transfer roller 16 contacts magnetic recording medium 8 to lead magnetic recording medium 8 to be taken in and discharged along transfer route 12. This transfer roller 16 allows first magnetic heads 22a and 22b to relatively slidingly contact magnetic stripe 6 (magnetic recording medium 8) so as to allow first magnetic heads 22a and 22b to read/write magnetic data. In addition, in the present invention, "to contact" means the relatively sliding contact of first magnetic heads 22a and 22b and magnetic recording medium 8, as well as the mutual press-contact between first magnetic heads 22a and 22b, and magnetic recording medium 8.

Magnetic recording medium processing device 10 has feeding driver 84 and feeding motor 34. Feeding driver 84 outputs the drive signal of feeding motor 34 based on the rotational speed signal or positional signal inputted from control means 98. Feeding motor 34 rotates transfer roller 16 via a conveying means such as a timing belt based on the drive signal inputted from feeding driver 84. And the feeding of magnetic recording medium 8 by feeding driver 84 and feeding motor 34 can be controlled based on the instruction from control means 98.

The input-output terminal of first magnetic heads 22a and 22b are connected to the input-output terminal of head amplifier 88 through flexible print circuit board 50. Various kinds of data can be recorded on magnetic stripe 6 by outputting the recording signal inputted to the input-output terminal of first magnetic heads 22a and 22b to first magnetic heads 22a and 22b while transferring magnetic recording medium 8.

In the case in which magnetic data recorded on magnetic stripe 6 of magnetic recording medium 8 is read out, various kinds of data recorded on magnetic stripe 6 are outputted from first magnetic heads 22a and 22b as control means 98 transfers magnetic recording medium 8 to along with the transfer route 12. The data outputted from first magnetic heads 22a and 22b are amplified by head amplifier 88 and, after being subjected to such processes as equalizing, filtering, and the like, they are outputted to control means 98 or the outside.

Flexible print circuit board 50 has at least head identification part 51 which identifies the type of first magnetic heads 22a and 22b, and is electrically connected to first magnetic heads 22a and 22b. Moreover, head identification part 51 is an identification circuit comprising jumper elements of identification resistor 54 and the like. The identification of first magnetic heads 22a and 22b can be done by the host device according to the connection combination of the jumper elements.

More precisely, as shown in Figs. 1 and 5, flexible print circuit board 50 comprises connection line 52 which connects the input-output terminal and earth line of first magnetic heads 22a and 22b to head amplifier 88; and head identification part 51 comprising identification resistor 54 for identifying the magnetic head type such as properties, material, and configuration, and the like; and connection line 53 of the identification resistor 54.

As to the resistance of identification resistor 54 of identification part 51, head identification part 51 judges automatically whether the connected first magnetic heads 22a and 22b are for high coercivity magnetic substance, whether it is for low coercivity magnetic substance, whether it is a read-only magnetic head, whether it is a read-and-write head, or whether it is a hard head of long life. Such judgments can be made with reference to the table that is read by control means 98 and recorded on recording means such as ROM, for example. By doing so, control means 98 or the host device can process or control magnetic data in accordance with the type of first magnetic heads 22a and 22b installed in magnetic recording medium processing device 10.

Moreover, in the case in which the lifetime for each material or type of first magnetic heads 22a and 22b as magnetic heads is known empirically through the usage or working environment, control means 98 can also notify the host device of the time to change first magnetic heads 22a and 22b according to the material or type, and usage of first magnetic heads 22a and 22b installed.

Moreover, for identification resistor 54 which is a jumper element, any resistor with a given resistance may be used, as well as a 0-ohm resistor or a jumper line.

Moreover, it is preferable that head identification part 51 with jumper elements such as identification resistor 54 or the like is equipped at the other end opposite to the end of the side which first magnetic heads 22a and 22b of flexible print circuit board 50 is equipped. That is, by positioning head identification part 51 installed on flexible print circuit board 50 in the vicinity of the connector as shown in Fig. 1, connection line 53 of identification resistor 54 can have a simple and short wiring configuration. As a result, the chance of having nonconformity due to erroneous identification of first magnetic heads 22a and 22b caused by the line breakage, short circuit, and the like can be reduced.

Next, the magnetic head group of the present invention is described in detail. Fig. 3 is a plan view showing an example of the magnetic head group of the present invention. Fig. 4 is a front view of the magnetic head group shown in Fig. 3. Fig. 5 is a bottom view of the magnetic head group shown in Fig. 3.

As shown in Figs. 2 and 5, first magnetic heads 22a and 22b are held so as to be moved freely in the direction perpendicular to the surface of magnetic stripe 6 of magnetic recording medium 8, and is fixed to head brackets 62 and 64 by adhesion or the like. Although this application shows the type in which the first magnetic head is divided into two heads 22a and 22b, it is not necessary for the magnetic head to be the divided structure type and may be the integrated type (so called "multi-head"). In addition, there is an advantage in using first magnetic heads 22a and 22b of the divided structure of this application; that is, good reading/writing can be done also on magnetic recording medium 8 warped in the width direction by tracking the surface of the magnetic stripe 6.

Pin holes 66 and 68 are formed in head brackets 62 and 64. These pin holes 66 and 68 are cooperated with guide pins 70 and 72 provided in magnetic head-holding frame 60, and hold first magnetic heads 22a and 22b so as to move them freely in the direction perpendicular to the surface of magnetic stripe 6. Furthermore, pin holes 66 and 68 are cooperated with guide pins 70 and 72 to fix first magnetic heads 22a and 22b to a given position so as to contactingly slide the first magnetic heads on the surface of magnetic stripe 6 of magnetic recording medium 8 and, at the same time, the angle of inclination of the gap of first magnetic heads 22a and 22b is made to coincide with the magnetic pole recorded on magnetic stripe 6.

Magnetic head-holding frame 60 (hereafter referred to as the "frame") is equipped with the above-mentioned guide pins 70 and 72. Guide pins 70 and 72 may be press-fitted into frame 60, insert-molded into frame 60, or integrally formed into frame 60.

Guide pins 70 and 72 has a function in which, in cooperation with pin holes 66 and 68, they fix first magnetic heads 22a and 22b to a given position within the surface of magnetic stripe 6 of magnetic recording medium 8; fix the gap of first magnetic heads 22a and 22b at a given angle of inclination (with respect to the magnetic pole recorded on magnetic stripe 6); and hold first magnetic heads 22a and 22b so as to move it freely in the direction perpendicular to the surface of magnetic stripe 6.

Head brackets 62 and 64 push first magnetic heads 22a and 22b in the direction of magnetic recording medium 8 by the energizing force of each pressing spring 76. By doing so, even if magnetic recording medium 8 is warped, since first magnetic heads 22a and 22b are allowed to contact magnetic stripe 6 of magnetic recording medium 8 stably by a given force, better reading/writing of magnetic data can be secured. In addition, in the example of Fig. 2, stroke stopper 78 is provided to restrict the perpendicular movement of first magnetic heads 22a and 22b.

Moreover, frame 60 has frame side-fitting part 74 to fit frame 60 to the device side-fitting part (boss hole 90 and device side-fitting surface 94 shown in Fig. 1) of magnetic recording medium processing device 10. Frame side-fitting part 74 is provided to hold head brackets 62 and 64 and to install magnetic head group 80 inside magnetic recording medium processing device 10 so as to form a given angle of inclination in a given position. It also has a positioning part (tap hole 85 and boss 86 shown in Fig. 3) with which frame 60 is positioned with respect to fitting part-side frame 13a which forms transfer route 12 to transfer magnetic recording medium 8, and a fitting part (frame side-fitting surface 82 shown in Fig. 3) which makes frame 60 detachable.

Fitting part-side frame 13a serves as a transfer reference surface during the transport of card type magnetic recording medium 8. Therefore, by fixing frame 60 of magnetic head group 80 associated with the present invention to fitting part-side frame 13a, first magnetic heads 22a and 22b can be accurately arranged in the position where it contacts the surface of magnetic stripe 6 of magnetic recording medium 8 using fitting part-side frame 13a as a reference.

Concretely, as shown in Figs. 3-5, frame side-fitting part 74 comprises frame side-fitting surface 82 which positions magnetic head group 80 along the X-Z plane shown in Fig. 2; tap hole 85, to which tapping screw 92, for example, is screwed to fix magnetic head group 80 on fitting part-side frame 13a inside the magnetic recording medium processing device 10; and boss 86 which positions magnetic head group 80 in the X direction and Z direction shown in Fig. 2 and, at the same time, determines the angle around the Y-axis shown in Fig. 1.

It the example shown in Figs. 1 and 4, boss 86 of magnetic head group 80 is inserted to boss hole 90 (See Fig. 1) provided to fitting part-side frame 13a inside magnetic recording medium processing device 10, and magnetic head group 80 is fixed in magnetic recording medium processing device 10 using two tapping screws 92 (See Fig. 1). As a result, the need for special adjustment such as positioning adjustment of first magnetic heads 22a and 22b, azimuth adjustment of first magnetic heads 22a and 22b, or the like is eliminated.

The positional relationship between this frame side-fitting part 74 and first magnetic heads 22a and 22b, and the angle of inclination of the gap of first magnetic heads 22a and 22b are adjusted in a manufacturer's plant when magnetic head group 80 is assembled. Particularly, the position and the angle of inclination of the gap of first magnetic heads 22a and 22b are adjusted to stay within the range of a given tolerance, utilizing frame side-fitting part 74 as a reference, for instance, by way of observing the gap of first magnetic heads 22a and 22b through interference fringes with a microscope and the like, and by way of fixing first magnetic heads 22a and 22b to head brackets 62 and 64 by an adhesive, screwing or the like.

By configuring magnetic head group 80 in this way, magnetic head group 80 in magnetic recording medium processing device 10 can secure its compatibility. As a result, operations such as the on-site azimuth adjustment at the time of exchange can be eliminated, and the magnetic head can be changed easily.

Generally, in the vicinity of first magnetic heads 22a and 22b, multiple photosensors 18 are installed to detect the size and position of magnetic recording medium 8. Therefore, installing photosensor 18 in frame 60 as described above tends to require larger frame 60, although there is an idea of installing photosensor 18 and a photosensor 18 mounting board in frame 60 holding first magnetic heads 22a and 22b.

Since a large sized magnetic head-holding frame has lower flexural rigidity or torsional rigidity, the frame material needs to be made by a metal such as aluminum having a high Young's modulus. Moreover, when the magnetic head is worn out, it is a common practice that the magnetic head group assembly with still sufficiently usable photosensors and a board is replaced with a new assembly; this is not desirable in view of conservation of resources.

However, a frame can be made small without photosensors installed in the frame; as a result, a resin which is easy to mold and inexpensive can be used as the frame material in place of a metal. For such frame materials, it is preferable to use engineering plastics which allow the use of tapping screws and do not require post-processing for a fixing part. Particularly, engineering plastics such as PPS (polyphenylene sulfide), m-PPE (denatured polyphenylene ether), and PC (polycarbonate), and the like are preferable.

Hence, according to the present invention, a magnetic head can be changed easily, and the price of magnetic head groups can be reduced, and maintenance cost of magnetic recording medium processing device can be reduced.

### [Description of Reference Symbols]

- 6: Magnetic stripe
- 8: Magnetic recording medium
- 10, 10A, 10B: Magnetic recording medium processing device
- 11: Recording medium processing device
- 12: Transfer route
- 13, 13: Frame
- 14: Recording medium intake
- 15: Opening
- 16: Transfer roller
- 17: Driven roller
- 18: Photograph sensor
- 22: First magnetic head as magnetic head
- 24: Second magnetic head as opposed member
- 26: Opposed roller
- 30: Insertion sensor
- 34: Feeding motor
- 40A, 40B: Holding member
- 41, 42: Rotary shaft
- 43: Spring
- 44: Lock member
- 45: Introduction part
- 46: Stopping part
- 47: Finger plate
- 48: Engaging part
- 49: Shielding plate
- 50: Flexible print circuit board
- 51: Head identification part
- 52, 63: Connection line
- 54: Identification Resistor
- 60: Magnetic head holding frame
- 61: Sensor
- 62, 64: Head bracket
- 63: Sensor fitting member
- 66, 68: Pin holes
- 70, 72: Guide pin
- 74: Mount
- 76: Pressing spring
- 78: Stroke stopper
- 80: Magnetic head group
- 82: Frame side-fitting surface
- 84: Feeding driver
- 85: Tap hole
- 86: Boss
- 88: Head amplifier
- 90: Boss hole
- 92: Tapping screw
- 94: Device side-fitting surface
- 98: Control means
- 100: Front configuration part
- 102: Escape part
- 105: Fitting flange
- 108: Fitting screw
- 110: Main body configuration part
- 118: Recording medium width a sensor
- 120: Boundary surface between the front configuration part and the main body configuration part
- 124: Prehead
- 130: Solenoid
- 132: Plunger pin
- 133: Up-and-down Pin
- 134: Link plate
- 135: Rotation center
- 150: Shutter
- 152: Slide hole

## Claims

1. A magnetic head group to be mounted to a magnetic recording medium processing device (10) that reads/writes magnetic data on a magnetic stripe (6) of a magnetic recording medium (8), comprising:
a magnetic head (22; 24) that reads/writes magnetic data; and
a head bracket ((62, 64) which fixes said magnetic head (22; 24) and holds it in such a way that it moves freely in the direction perpendicular to the magnetic stripe (6) of said magnetic recording medium (8);
**characterized by**
a flexible print circuit board (50) which is provided with a magnetic head-holding frame (60) which holds said head bracket (62, 64) and has a frame side-fitting part (82) that installs said magnetic head group (80) in a given position inside said magnetic recording medium processing device (10) so as to form a given angle of inclination, and a head identification part (51) to identify a magnetic head type, and is connected electrically to said magnetic head (22; 24).

2. The magnetic head group as described in Claim 1 **characterized in that** said head identification part (51) is an identification circuit comprising jumper elements, which is set up on the side opposite to one end where said magnetic head (22; 24) of said flexible print circuit board (50) is installed and, according to the connection combination of said jumper elements, identification of the magnetic head type with a host device is made possible.

3. The magnetic head group as described in Claim 1 **characterized in that,** in the frame side-fitting part (82) that said magnetic head-holding frame (60) has, there are a positioning part which positions said magnetic head-holding frame (60) on the transfer route on which said magnetic recording medium (8) is transferred, and a fixing part which makes said magnet head-holding frame (60) detachable.

4. A magnetic recording medium processing device equipped with at least a frame (13) to form a transfer route on which the magnetic recording medium (8) is transferred, and the magnetic head group (80) as described in Claim 1; and said magnetic head group (80) is fixed in a given position inside said magnetic recording medium processing device (10) at a given angle of inclination by installing said magnetic head-holding frame (60) in said frame (13).

5. The magnetic recording medium processing device as described in Claim 4 in that said frame (13) has a device side-fitting part (94) on said frame side-fitting part (82).

6. The magnetic head group as described in Claim 1 **characterized in that** said magnetic head-holding frame (60) comprises
multiple guide pins (70, 72) for holding a magnetic head-fixing head bracket so as to move it freely in the direction perpendicular to the surface of the magnetic stripe (6) of said magnetic recording medium (8); and
a frame side-fitting part (82) which installs the held magnetic head (22; 24) in a given position inside said magnetic recording medium processing device (10) so as to form a given angle of inclination;
and is formed with engineering plastics.

## Patentansprüche

1. An einer Vorrichtung (10) zum Betrieb eines magnetischen Aufzeichnungsmediums zu montierende Magnetkopfgruppe, welche magnetische Daten auf einem Magnetstreifen (6) eines magnetischen Aufzeichnungsmediums (8) liest/schreibt, mit
einem Magnetkopf (22); 24), der magnetische Daten liest/schreibt; und einer Kopfklammer (62, 64), die den Magnetkopf (22,24) fixiert und derart hält, dass er sich frei in der Richtung rechtwinklig zum Magnetstreifen (6) des magnetischen Aufzeichnungsmediums (8) bewegt;
**gekennzeichnet durch**
eine flexible gedruckte Leiterplatte (50), die mit einem Magnetkopfhalterahmen (60), welcher die Kopfklammer (62, 64) hält und einen Rahmenseitenbefestigungsteil (82) besitzt, das die Magnetkopfgruppe (80) in einer gegebenen Position innerhalb der Vorrichtung (10) zum Betrieb eines magnetischen Aufzeichnungsmediums installiert, um einen gegebenen Neigungswinkel zu bilden, und einem Kopfidentifizierungsteil (51) zur Identifizierung einer Magnetkopfart versehen und elektrisch am Magnetkopf (22; 24) angeschlossen ist.

2. Magnetkopfgruppe nach Anspruch 1,
**dadurch gekennzeichnet, dass** es sich beim Kopfidentifizierungsteil (51) um eine Identifizierungsschaltung mit Drahtbrückenelementen handelt, welche an der Seite gegenüber dem einen Ende angeordnet ist, wo der Magnetkopf (22; 24)
der flexiblen gedruckten Leiterplatte (50) installiert und in Abhängigkeit von der Verbindungskombination der Drahtbrückenelemente eine Identifizierung der Magnetkopfart mit einer Host-Vorrichtung möglich ist.

3. Magnetkopfgruppe nach Anspruch 1.
**dadurch gekennzeichnet, dass** im Rahmenseitenbefestigungsteil (82), das der Magnetkopfhalterahmen (60) besitzt, ein Positionierungsteil, das den Magnetkopfhalterahmen (60) auf der Wegstrecke positioniert, auf der das magnetische Aufzeichnungsmedium entlang geführt wird, und ein Befestigungsteil vorgesehen sind, das den Magnetkopfhalterahmen (60) abnehmbar macht.

4. Vorrichtung zum Betrieb eines magnetischen Aufzeichnungsmediums mit mindestens einem Rahmen (13) zur Bildung einer Wegstrecke, auf der das magnetische Aufzeichnungsmedium (8) entlang geführt wird, und der Magnetkopfgruppe (80) nach Anspruch 1, wobei die Magnetkopfgruppe (80) in einer gegebenen Position innerhalb der Vorrichtung (10) zum Betrieb eines magnetischen Aufzeichnungsmediums unter einem gegebenen Neigungswinkel durch Installation des Magnetkopfhalterahmens (60) im Rahmen (13) fixiert ist.

5. Vorrichtung zum Betrieb eines magnetischen Aufzeichnungsmediums nach Anspruch 4,
**dadurch gekennzeichnet, dass** der Rahmen (13) ein Vorrichtungsseitenbefestigungsteil (94) am Rahmenseitenbefestigungsteil (82) besitzt.

6. Magnetkopfgruppe nach Anspruch 1, **dadurch gekennzeichnet, dass** der Magnetkopfhalterahmen (60) mehrere Führungsstifte (70, 72) zur Halterung einer einen Magnetkopf fixierenden Kopfklammer, um sie in der Richtung rechtwinklig zur Oberfläche des Magnetstreifens (6) des magnetischen Aufzeichnungsmediums (8) zu bewegen; und
ein Rahmenseitenbefestigungsteil (82) aufweist, welches den gehaltenen Magnetkopf (22: 24) in einer gegebenen Position innerhalb der Vorrichtung (10) zum Betrieb eines magnetischen Aufzeichnungsmediums installiert, um einen gegebenen Neigungswinkel zu bilden, und mit Kunststoff gebildet ist.

## Revendications

1. Groupe de tête magnétique à monter sur un dispositif de traitement de support d'enregistrement magnétique (10) qui lit/écrit des données magnétiques sur une bande magnétique (6) d'un support d'enregistrement magnétique (8), comprenant :
une tête magnétique (22 ; 24) qui lit/écrit des données magnétiques ; et
un support de tête (62, 64) qui fixe ladite tête magnétique (22 ; 24) et la maintient de manière à ce qu'elle se déplace librement dans la direction perpendiculaire à la bande magnétique (6) dudit support d'enregistrement magnétique (8) ;
**caractérisé par**
une carte de circuits imprimés flexible (50) qui est munie d'un cadre de maintien de tête magnétique (60) qui maintient ledit support de tête (62, 64) et a une partie de montage sur le côté de cadre (82) qui installe ledit groupe de tête magnétique (80) à une position donnée à l'intérieur dudit dispositif de traitement de support d'enregistrement magnétique (10) de manière à former un angle d'inclinaison donné, et une partie d'identification de tête (51) pour identifier un type de tête magnétique, et est connectée électriquement à ladite tête magnétique (22 ; 24).

2. Groupe de tête magnétique selon la revendication 1, **caractérisé en ce que** ladite partie d'identification de tête (51) est un circuit d'identification comprenant des éléments cavaliers, qui est positionné sur le côté opposé à une extrémité où ladite tête magnétique (22 ; 24) de ladite carte de circuits imprimés flexible (50) est installée et, selon la combinaison de connexions desdits éléments cavaliers, l'identification du type de tête magnétique avec un dispositif hôte est rendue possible.

3. Groupe de tête magnétique selon la revendication 1, **caractérisé en ce que**, dans la partie de montage sur le côté de cadre (82) que ledit cadre de maintien de tête magnétique (60) a, il y a une partie de positionnement qui positionne ledit cadre de maintien de tête magnétique (60) sur le passage de transfert sur lequel ledit support d'enregistrement magnétique (8) est transféré, et une partie de fixation qui rend ledit cadre de maintien de tête magnétique (60) détachable.

4. Dispositif de traitement de support d'enregistrement magnétique muni au moins d'un cadre (13) pour former un passage de transfert sur lequel le support d'enregistrement magnétique (8) est transféré, et le groupe de tête magnétique (80) selon la revendication 1 ; et ledit groupe de tête magnétique (80) est fixé à une position donnée à l'intérieur dudit dispositif de traitement de support d'enregistrement magnétique (10) à un angle d'inclinaison donné en installant ledit cadre de maintien de tête magnétique (60) dans ledit cadre (13).

5. Dispositif de traitement de support d'enregistrement magnétique selon la revendication 4, dans lequel ledit cadre (13) a une partie de montage sur le côté de dispositif (94) sur ladite partie de montage sur le côté de trame (82).

6. Groupe de tête magnétique selon la revendication 1, **caractérisé en ce que** ledit cadre de maintien de tête magnétique (60) comprend :
de multiples broches de guidage (70 ; 72) pour maintenir un support de tête de fixation de tête magnétique de manière à la déplacer librement dans la direction perpendiculaire à la surface de la bande magnétique (6) dudit support d'enregistrement magnétique (8) ; et
une partie de montage sur le côté de cadre (82) qui installe la tête magnétique maintenu (22 ; 24) à une position donnée à l'intérieur dudit dispositif de traitement de support d'enregistrement magnétique (10) de manière à former un angle d'inclinaison donné ;
et il est constitué de plastique d'ingénierie.
